# EUROPÄISCHE PATENTSCHRIFT

(11) **EP 1 444 112 B1**
(45) Veröffentlichungstag und Bekanntmachung des Hinweises auf die Patenterteilung: **25.06.2008**
(21) Anmeldenummer: 02791680.8
(22) Anmeldetag: 14.11.2002
(51) Int. Cl.: B60R 13/01, E05C 1/14

(54) **ABDECKUNG FÜR EINE WANDUNG EINES FAHRZEUGINNENRAUMS**
COVERING FOR A WALL OF A VEHICLE PASSENGER COMPARTMENT
COUVERCLE POUR PAROI D'HABITACLE DE VEHICULE

(30) Priorität: 17.11.2001 DE 10156692
(43) Veröffentlichungstag der Anmeldung: 11.08.2004
(73) Patentinhaber: Bayerische Motoren Werke Aktiengesellschaft, 80809 München (DE)
(72) Erfinder: STÖCKL, Siegfried, 84076 Pfeffenhausen (DE); BURMBERGER, Christoph, 36041 Fulda (DE)
(86) Internationale Anmeldenummer: PCT/EP2002/012781
(87) Internationale Veröffentlichungsnummer: WO 2003/042000

(56) Entgegenhaltungen:
- US-A- 2 497 624
- US-A- 3 044 815
- US-A- 5 056 846
- US-A- 6 109 669
- US-B1- 6 247 741

## Beschreibung

Die Erfindung bezieht sich auf eine Abdeckung für eine Wandung eines Fahrzeuginnenraums der im Oberbegriff des Patentanspruchs 1 genannten Art.

Eine allgemein bekannte, auf dem Gepäckraumboden eines Personenkraftwagens oder eines Kombifahrzeugs aufliegende, herausnehmbare Abdeckung überdeckt üblicherweise die Mulde des Reserverades und ist daher verhältnismäßig biegesteif gestaltet. Da insbesondere ein Kombifahrzeug für unterschiedliche Zweckbestimmungen, wie eine Verwendung in der Land- und Forstwirtschaft und auch für übliche Einkaufsfahrten genutzt wird, sind Abdeckungen bekannt, die an einer Auflageseite, beispielsweise mit einem Teppich, auf der anderen Auflageseite dagegen mit einer Gummimatte, einer Klappbox oder dergleichen versehen sind. Eine solche Abdeckung soll jedoch im Bereich der heckseitigen Stoßstange möglichst mit dem Gepäckraumboden verrastet werden, damit bei einem Heckcrash die sich mit ihrem gegenüberliegenden Randbereich an den Führungsschienen der Rücksitze, an der Zwischenwand oder dergleichen abstützende Abdeckung im Mittelbereich ihrer Längserstreckung nach oben auswölben kann und damit nicht unkontrolliert in den Fahrzeuginnenraum geschleudert wird.

Eine Abdeckung gemäß dem Oberbegriff des Anspruchs 1 ist aus der US 6 247 741 B1 bekannt.

Aufgabe der Erfindung ist es, bei einer Abdeckung der im Oberbegriff des Patentanspruchs 1 genannten Art eine alternative Einrichtung vorzusehen, durch die die Abdeckung an ihren beiden Auflageseiten mit dem Fahrzeugaufbau verrastbar ist.

Zur Lösung der Aufgabe sind die im Patentanspruch 1 dargelegten Merkmale vorgesehen.

Da das verschiebbare oder verschwenkbare Verrastelement beispielsweise durch ein beidseits über die beiden gegenüberliegenden Auflageseiten der Abdeckung hinausragendes Griffteil betätigbar ist, kann die Abdeckung an ihren beiden Auflageseiten mit einem fahrzeugaufbaufesten Teil verrastet werden und ist dadurch zuverlässig lösbar festgelegt. Bei einer am heckseitigen Randbereich der auf dem Gepäckraumboden eines Personenkraftwagens oder Kombifahrzeugs aufliegenden Abdeckung wird durch einen Schubriegel bei einem Heckcrash die mit ihrem gegenüberliegenden Randbereich an den Rücksitzen oder dergleichen schubfest anliegende Abdeckung im Mittelbereich ihrer Längserstreckung ausgewölbt, so dass hierbei durch die Abdeckung selbst und/oder durch auf dieser aufliegende Gegenstände keine Folgeschäden entstehen.

Zweckmäßigerweise ist am Randbereich der Abdeckung ein eine geringe Bauhöhe aufweisendes Aufnahmegehäuse angeordnet, das aus zwei Gehäuseteilen besteht, wobei im Mittelbereich des zweiten Gehäuseteils ein plattenförmiges Aufnahmeteil durch Klipse oder dergleichen schubfest eingesetzt ist; ferner kann das Aufnahmeteil auch einstückig am zweiten Gehäuseteil ausgebildet sein. Das Aufnahmeteil hat eine U-förmige Ausnehmung, an deren gegenüberliegenden Seitenrändern die zwei starr miteinander verbundenen Schubriegel längsverschiebbar vorgesehen sind. Dabei stützt sich am Aufnahmeteil eine Druckfeder ab, die mit Vorspannung gegen die Schubriegel wirkt, so dass diese stets ein fahrzeugaufbaufestes Teil verrastend hintergreifen. Hierfür haben die beiden Schubriegel jeweils eine Schrägfläche, deren Ebenen in entgegengesetzten Richtungen verlaufen, wodurch nach dem jeweiligen Umwenden der Abdeckung ein Schubriegel gegen die Wirkung der Druckfeder kurzzeitig zurückgeschoben wird und sodann federbelastet die Verriegelungslage einnimmt. Dabei bestehen sämtliche Teile, also die beiden Gehäuseteile, das Aufnahmeteil und die Schubriegel aus Kunststoff und haben damit ein sehr geringes Gewicht. Darüberhinaus können die einzelnen Teile aufgrund ihrer unkomplizierten Formgebung durch Spritzgusswerkzeuge ohne Schieber und damit insgesamt kostengünstig hergestellt werden.

Die beiden Gehäuseteile des Aufnahmegehäuses haben an ihrer Außenseite jeweils eine rechteckförmige, muldenförmige Vertiefung, in der sich jeweils eine zum Betätigen der Schubriegel dienende Griffplatte befindet. Diese sind jeweils im Mittelbereich ihrer Schwenkerstreckung an einem Aufnahmeteil angelenkt, das seinerseits am zweiten Gehäuseteil starr befestigt ist. Ferner stehen von den Griffplatten innenseitig jeweils drei Schubteile ab, durch die beim Ausschwenken der Griffplatten der jeweils zugeordnete Distanzbolzen der Schubriegel beaufschlagt wird, wodurch diese von der Verriegelungslage in die Entriegelungslage verlagert werden. Dabei werden die Griffplatten durch jeweils eine an der Aufnahmeplatte angebrachte Zugfeder in ihre Ruhelage gehalten. Somit sind die Schubriegel über die Griffplatten in bequemer Weise zu verlagern. Ferner haben auch die Gehäuseteile an den auf der Abdeckung aufliegenden Umfangsrändern eine geringe Wanddicke und da hierbei die muldenförmigen Vertiefungen sich in einer Ausnehmung der Abdeckung befinden, ist das Aufnahmegehäuse insgesamt räumlich gedrungen gestaltet. Die Längserstreckung der muldenförmigen Vertiefung ist derart bemessen, dass in Ruhelage der Griffplatten zwischen diesen und der gegenüberliegenden Umfangskante der muldenförmigen Vertiefung jeweils eine Griffmulde verbleibt, über die die Griffplatte sehr griffgünstig - beispielsweise mit vier nebeneinanderliegenden Fingern - durch bloßes Hochschwenken betätigbar ist. Schließlich hat eines der Gehäuseteile jeweils im Bereich seiner Seitenränder einen Rastclips, die in eine am anderen Gehäuseteil vorgesehene, fensterartige Ausnehmung verrastend eingreifen, so dass die Gehäuseteile sehr rasch und in einfacher Weise montierbar sind, aber dennoch an der Abdeckung rüttelsicher festgelegt sind. Ferner wird durch die geringe Bauhöhe der Gehäuseteile die verfügbare Ladehöhe in einem Gepäckraum kaum vermindert. Da ferner die Griffplatten unabhängig voneinander betätigbar sind, bleibt beim Hochschwenken der obenliegenden Griffplatte die untenliegende Griffplatte in Ruhelage, so dass beim Entriegelungsvorgang für diesen ein sich gegebenenfalls unterhalb der Abdeckung liegender Gegenstand nicht hinderlich ist. Die starr miteinander verbundenen Schubriegel können aus einem anderen Kunststoff wie das plattenförmige Aufnahmeteil bestehen, so dass ein Knarren zwischen den beweglichen Teilen vermieden wird.

Ein Ausführungsbeispiel der Erfindung ist in der Zeichnung dargestellt und wird im Folgenden erläutert. Es zeigt:
- Figur 1: eine perspektivische Ansicht des Heckbereichs eines Kombifahrzeugs mit einer auf dem Gepäckraumboden aufliegenden Abdeckung mit Aufnahmegehäuse,
- Figur 2: eine perspektivische Einzeldarstellung des zweiten Gehäuseteils mit Schubriegel bei abgenommenem ersten Gehäuseteil,
- Figur 3: eine perspektivische Darstellung sämtlicher Einzelteile der erfindungsgemäßen Verriegelungseinrichtung,
- Figur 4: eine funktionale, teilweise schematische Darstellung der Schubriegel in Verriegelungslage (durchgezogene Linien) und Entriegelungslage (strichpunktierte Linien).

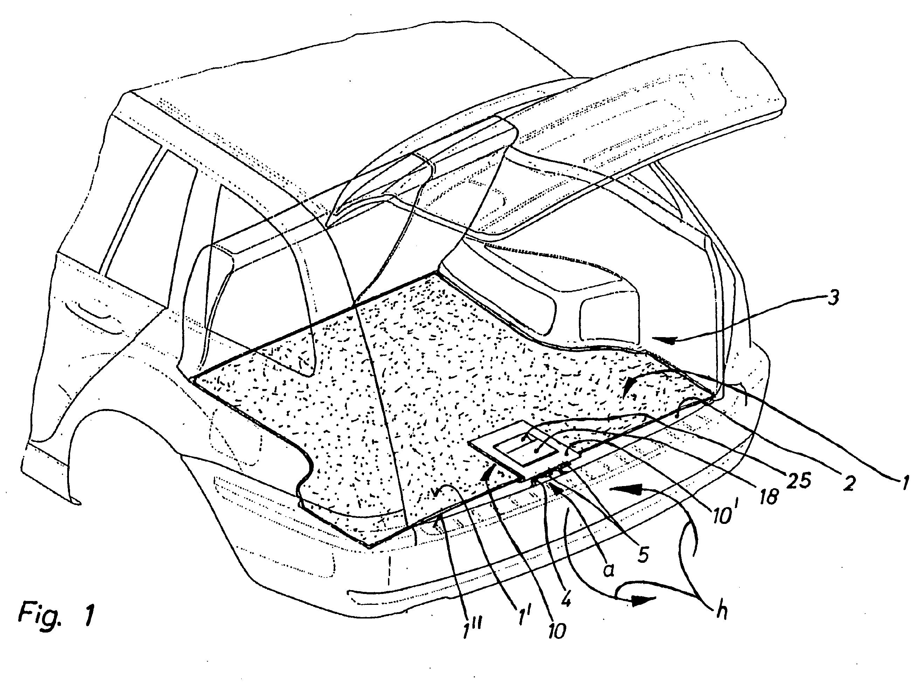

In Figur 1 ist eine verhältnismäßig biegesteife Abdeckung 1 ersichtlich, die auf dem Boden 2 des Gepäckraums 3 eines Kombifahrzeugs aufliegt. Dabei erstreckt sich die Abdeckung 1 vom Bereich der hinteren Stoßstange des Kombifahrzeugs bis zu den Rückenlehnen der Rücksitze.

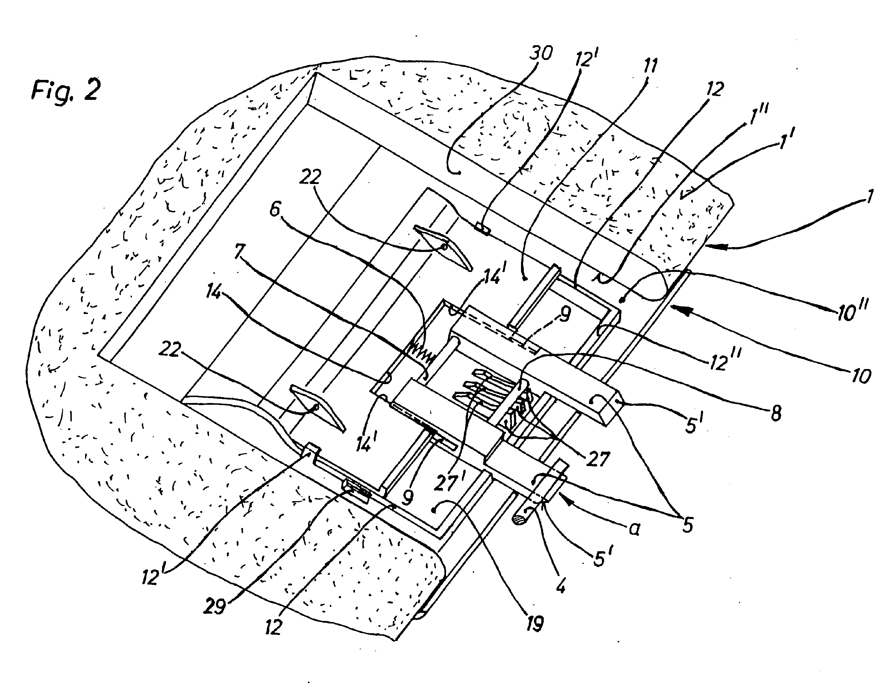

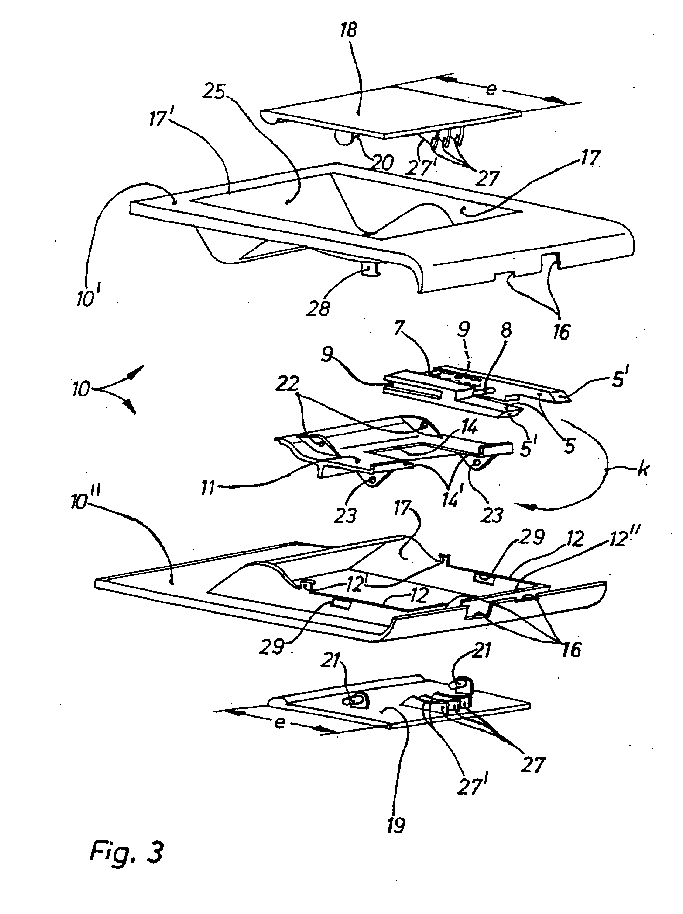

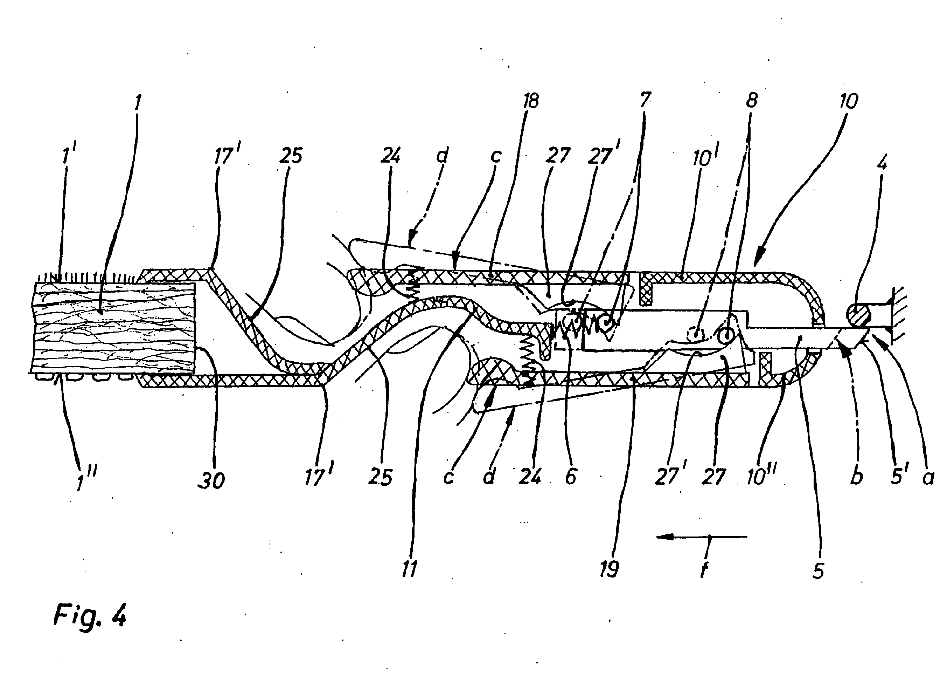

Die Abdeckung 1 kann auf der obenliegenden Auflageseite 1' einen Teppichboden oder dergleichen aufweisen und an ihrer untenliegenden Auflageseite 1" mit einer Gummimatte und/oder einer zusammenfaltbaren Klappbox oder dergleichen versehen sein. Damit die Abdeckung 1 nach Umwendung ihrer Auflageseiten 1' und 1" (Richtungen der Pfeile h) und der dabei jeweils obenliegenden Auflageseite 1' oder 1" aus Sicherheitsgründen (bei Krafteinwirkung bei einem Heckcrash) mit einem fahrzeugaufbaufesten Teil 4 lösbar verriegelt werden kann, dienen zwei, am heckseitigen Rand der Abdeckung 1 vorgesehene Schubriegel 5. Diese sind in einem Aufnahmegehäuse 10 längsverschiebbar angeordnet, das sich seinerseits in einer Ausnehmung 30 der Abdeckung 1 befindet. Die zwei Schubriegel 5 sind durch zwei, im Abstand voneinander angeordnete Distanzbolzen 7 und 8 starr miteinander verbunden und verlaufen dabei abstandsparallel, wobei alle vier Teile durch ein einstückiges Kunststoffteil gebildet sind. Ferner ist das freie Ende der beiden Schubriegel 5 jeweils als eine Schrägfläche 5' ausgebildet, deren Ebenen in entgegengesetzten Richtungen verlaufen, wie die Figuren 2 und 3 zeigen. Hierdurch ist gewährleistet, dass nach der jeweiligen Umwendung der Abdeckung 1 in Pfeilrichtung h stets einer der beiden Schubriegel 5 über seine jeweilige Schrägfläche 5' mit dem fahrzeugaufbaufesten Teil 4 derart zusammenwirkt, dass der Schubriegel 5 zuerst gegen die Wirkung der Druckfeder 6 in Pfeilrichtung f verlagert wird (Figur 4) und sodann das Teil 4 federbelastet hintergreift. Schließlich ist an den beiden voneinander abgewandten Außenseiten der Schubriegel 5 jeweils eine längsverlaufende Aufnahmenut 9 ausgebildet.

Wie die Figuren 2 bis 4 zeigen, ist das die beiden Schubriegel 5 enthaltende Aufnahmegehäuse 10 längsgeteilt, wobei dessen erstes Gehäuseteil 10' auf der obenliegenden Auflageseite 1' der Abdeckung 1 liegt, während sich an deren untenliegenden Auflageseite 1" das zweite Gehäuseteil 10" befindet. In dessen Mittelbereich ist ein plattenförmiges Aufnahmeteil 11 angeordnet, das auf zwei gegenüberliegenden, vom zweiten Gehäuseteil 10" nach innen abstehenden Längsrändern 12 aufliegt und mit diesen durch jeweils einen nach oben abstehenden Clip 12' schubfest verrastet ist. Dabei erstreckt sich über die Längsränder 12 ein Querrand 12". Das Aufnahmeteil 11 hat eine U-förmige, zum heckseitigen Rand der Abdeckung 1 hin offene Ausnehmung 14, in deren beiden gegenüberliegenden Seitenränder 14' (nach Anordnung in Pfeilrichtung k) jeweils ein Schubriegel 5 über seine Aufnahmenut 9 eingreift, so dass die beiden Schubriegel 5 in Fahrzeuglängsrichtung (X-Achse) längsverschiebbar geführt sind. Schließlich stützt sich am Steg U-förmigen Ausnehmung 14 die Druckfeder 6 ab, die mit Vorspannung gegen den ersten Distanzbolzen 7 wirkt, wodurch die Schubriegel 5 stets in Verriegelungslage a gehalten werden. Das erste und das zweite Gehäuseteil 10', 10" sowie der Querrand 12" sind zum Durchtritt der beiden Schubriegel 5 jeweils mit rechteckförmigen Ausnehmungen 16 versehen.

In den Figuren 2 und 3 ist ferner ersichtlich, dass das erste und das zweite Gehäuseteil 10', 10" jeweils eine rechteckförmige Durchtrittsöffnung 17 hat, in der sich jeweils eine Griffplatte 18, 19 mit rechteckförmigem Umriss befindet. Diese haben innenseitig jeweils im Mittelbereich der Erstreckung ihres Schwenkabschnitts e zwei fluchtend verlaufende Lagerzapfen 20, 21, wobei die Lagerzapfen 20 der Griffplatte 18 in die an der Oberseite des Aufnahmeteils 11 fluchtend ausgebildeten Lagerbohrungen 22 zur schwenkbaren Lagerung der Griffplatte 18 eingreifen. Ferner greifen auch die an der Griffplatte 19 innenseitig abstehenden Lagerzapfen 21 in die an der Unterseite des Aufnahmeteils 11 fluchtend vorgesehenen Lagerbohrungen 23 ein, so dass die beiden Griffplatten 18, 19 über die Lagerzapfen 20, 21 zwischen Ruhelage c und der Wirklage d schwenkbar gelagert sind. Wie in Figur 4 ersichtlich, werden die beiden Griffplatten 18, 19 durch jeweils eine im Mittelbereich ihrer Breitenerstreckung angreifende und mit ihrem gegenüberliegenden Endabschnitt am Aufnahmeteil 11 festgelegte Zugfeder 24 in Ruhelage c gehalten, wobei sie oberflächenbündig zu den die Durchgangsöffnung 17 umgebenden Umfangsränder des ersten und des zweiten Gehäuseteils 10', 10" verlaufen. Damit die Griffplatten 18, 19 in der Ruhelage c griffgünstig erfasst werden können, ist zwischen dem freien Randbereich der Griffplatten 18 und 19 und der zugewandten Umfangskante 17' der Durchtrittsöffnung 17 jeweils eine Griffmulde 25 vorgesehen, in der bequem vier Finger einer Betätigungsperson zum Verschwenken der Griffplatten 18, 19 angeordnet werden können, wie Figur 4 zeigt. Schließlich ist in Figur 3 und insbesondere in Figur 4 zu ersehen, dass die Anlenkung der Griffplatten 18, 19 am Aufnahmeteil 11 in Fahrzeuglängsrichtung lageversetzt zueinander vorgesehen sind. Hierdurch wird erreicht, dass die Bauhöhe des ersten und des zweiten Gehäuseteils 10' und 10" bei an der Abdeckung 1 angebrachtem Aufnahmegehäuse 10 möglichst gering ist, so dass auch die Abdeckung 1 eine verhältnismäßig geringe Dicke aufweisen kann. Hierfür haben auch die Umfangsränder des ersten und des zweiten Gehäuseteils 10', 10" im Auflagebereich der Abdeckung 1 eine verhältnismäßig geringe Wanddicke.

In den Figuren 2, 3 und 4 ist schließlich ersichtlich, dass von den beiden Griffplatten 18, 19 innenseitig gegenüberliegend ihres Betätigungsrandes jeweils drei Schubteile 27 abstehen, die abstandsparallel zueinander verlaufen. Dabei haben die Schubteile 27 jeweils innenseitig eine konkave Kurvenbahn 27', die derart angeordnet und so ausgebildet ist, dass beim Verschwenken der Griffplatten 18 und 19 von der Ruhelage c (in Figur 4 mit durchgezogenen Linien dargestellt) gegen die Wirkung der Zugfeder 24 in die Wirklage d (mit strichpunktierten Linien dargestellt) der erste Distanzbolzen 7 bzw. der zweite Distanzbolzen 8 beaufschlagt und dadurch die Schubriegel 5 in Pfeilrichtung f von der mit durchgezogenen Linien veranschaulichten Verriegelungslage a in die mit strichpunktierten Linien dargestellte Entriegelungslage b verlagert werden. Dabei ist zu beachten, dass nur die jeweils obenliegende Griffplatte betätigt werden kann, also in dem in Figur 4 dargestellten Ausführungsbeispiel die Griffplatte 18 (während bei umgewendeter Abdeckung 1 die Griffplatte 19 betätigt wird), wobei hierbei die Schrägfläche 5' des Schubriegels 5 in der dargestellten Schräglage verläuft.

Zur Befestigung des Aufnahmegehäuses 10 in der Ausnehmung 30 der Abdeckung 1 hat das erste Gehäuseteil 10' an seinen gegenüberliegenden Seitenrändern jeweils einen nach unten abstehenden Rastclip 28, die in der in den Figuren 1 und 4 dargestellten Montagelage des ersten und des zweiten Gehäuseteils 10', 10" an der Abdeckung 1 in zugeordnete, am zweiten Gehäuseteil 10" vorgesehene, fensterartige Ausnehmungen 29 verrastend eingreifen. Dabei bestehen sämtliche Teile der Verriegelungseinrichtung aus Kunststoff.

## Patentansprüche

1. Abdeckung für eine Wandung eines Fahrzeuginnenraums, insbesondere für den Gepäckraumboden eines Personenkraftwagens, wobei die Abdeckung wahlweise an einer ihrer gegenüberliegenden Auflageseiten an der Fahrzeuginnenwandung angeordnet werden kann, wobei die Abdeckung (1) mindestens ein, an beiden ihrer Auflageseiten (1', 1") betätigbares Verrastelement (5) aufweist, das mit einem fahrzeugaufbaufesten Teil (4) lösbar verrastbar ist, **gekennzeichnet durch** zwei abstandsparallel verlaufende sowie **durch** zwei, im Abstand voneinander angeordnete Distanzbolzen (7, 8) starr miteinander verbundene Schubriegel (5), wobei das freie Ende der beiden Schubriegel (5) jeweils als eine Schrägfläche (5') ausgebildet ist, deren Ebenen in entgegen gesetzte Richtungen verlaufen.

2. Abdeckung nach Anspruch 1, **dadurch gekennzeichnet, dass** als Verrastelement stets einer der beiden längsverschiebbaren, am heckseitigen Randbereich der sich auf einem Gepäckraumboden (2) befindenden Abdeckung (1) vorgesehenen Schubriegel (5) dient, der in Verriegelungslage (a) das fahrzeugaufbaufeste Teil (4) federbelastet hintergreift.

3. Abdeckung nach Anspruch 1 oder 2, **gekennzeichnet durch** ein längsgeteiltes Aufnahmegehäuse (10), in dessen zweitem Gehäuseteil (10") ein plattenförmiges Aufnahmeteil (11) schubfest eingesetzt ist, das eine U-förmige, zum freien Endabschnitt des Schubriegels (5) hin offene Ausnehmung (14) aufweist.

4. Abdeckung nach einem der Ansprüche 3, **dadurch gekennzeichnet, dass** die starr miteinander verbundenen Schubriegel (5) über seitliche Längsführungen (9, 14') mit den gegenüberliegenden Seitenrändern (14') der U-förmigen Ausnehmung (14) des Aufnahmeteils (11) längsverschiebbar zusammenwirken.

5. Abdeckung nach einem der Ansprüche 3 oder 4, **dadurch gekennzeichnet, dass** sich am Aufnahmeteil (11) ein Federelement (15) abstützt und mit Vorspannung gegen die beiden Schubriegel (7) wirkt, wodurch diese in Verriegelungslage (a) gehalten werden.

6. Abdeckung nach einem der Ansprüche 3 bis 5, **dadurch gekennzeichnet, dass**
- an den gegenüberliegenden, in Bezug auf die beiden Auflageseiten (1', 1") der Abdeckung (1) verlaufenden Außenseiten der Gehäuseteile (10', 10") des Aufnahmegehäuses (10) jeweils eine Griffplatte (18, 19) vorgesehen ist, die jeweils im Mittelbereich ihres Schwenkabschnitts (e) unter Durchsetzung einer Durchtrittsöffnung (17) in den Gehäuseteilen des Aufnahmegehäuses jeweils an einem zugewandten Bereich des Aufnahmeteils (11) angelenkt sind,
- von den Griffplatten (18, 19) innenseitig gegenüberliegend ihres Betätigungsrandes jeweils mindestens ein Schubteil (27) absteht, das beim Verschwenken der Griffplatten von ihrer Ruhelage (c) in die Wirklage (d) mit dem jeweils zugeordneten Distanzbolzen (7 bzw. 8) der beiden Schubriegel (5) derart zusammenwirkt, dass diese von der Verriegelungslage (a) in die Entriegelungslage (b) verlagert werden.

7. Abdeckung nach Anspruch 6, **dadurch gekennzeichnet, dass** die beiden Griffplatten (18, 19) jeweils durch eine ihrerseits am Aufnahmeteil (11) angebrachte Zugfeder (24) in Ruhelage (c) gehalten werden.

8. Abdeckung nach Anspruch 6 oder 7, **dadurch gekennzeichnet, dass** das erste und zweite Gehäuseteil (10', 10") des Aufnahmegehäuses (10) an ihren auf der Abdeckung (1) aufliegenden Umfangsrändern eine geringe Wanddicke haben, wobei die Umfangsränder jeweils die in den beiden Gehäuseteilen vorgesehene Durchtrittsöffnung (17) umgeben, in der sich jeweils die in Ruhelage (c) oberflächenbündig zu den Umfangsrändern der Gehäuseteile verlaufenden Griffplatten (18, 19) befinden, wobei in deren Ruhelage (c) jeweils eine Griffmulde (25) vorhanden ist, die zwischen dem Betätigungsrand der Griffplatte und der zugewandten Umfangskante (17') der Durchtrittsöffnung (17) liegt.

9. Abdeckung nach einem der Ansprüche 3 bis 8, **dadurch gekennzeichnet, dass** das erste Gehäuseteil (10') an gegenüberliegenden Seitenrändern jeweils mindestens einen Rastclips (28) aufweist, die in Montagelage der beiden Gehäuseteile (10', 10") an der Abdeckung (1) in zugeordnete, am zweiten Gehäuseteil (10") vorgesehene Ausnehmungen (29) verrastend eingreifen und sich dabei die Gehäuseteile in einer Ausnehmung (30) der Abdeckung befinden.

## Claims

1. A cover for a vehicle inner wall, especially for the bottom of a passenger car boot, wherein when required one of the opposite supporting sides of the cover can be disposed on the inner wall, wherein the cover (1), on each of its supporting sides (1', 1 "), has a locking element releasably lockable to a part (4) fixed to the vehicle body, **characterised by** two parallel slide bolts (5) rigidly connected by two spaced-apart distance pins (7, 8), wherein the free end of each bolt (5) is in the form of a sloping surface (5'), the surfaces extending in planes in opposite directions.

2. A cover according to claim 1, **characterised in that** the locking element is always one of the two longitudinally movable slide bolts (5) disposed on the rear edge region of the cover (1) on a boot bottom (2), the bolts being spring-biased in the locked position (a) and extending under the part (4) fixed to the vehicle body.

3. A cover according to claim 1 or claim 2, **characterised by** a longitudinally divided receiving casing (10) having a second part (10") containing a non-slidable plate-shaped receiving part (11) formed with a U-shaped recess (14) which opens towards the free end portion of the slide bolt (5).

4. A cover according to any of claims 3, **characterised in that** the rigidly connected slide bolts (5), via longitudinal side guides (9, 14'), are longitudinally movable in co-operation with the opposite side edges (14') of the U-shaped recess (14) in the receiving part (11).

5. A cover according to claim 3 or claim 4, **characterised in that** a spring element bears on the receiving part (11) and acts with prestress against the two slide bolts (7), thus holding them in the locked position (a).

6. A cover according to any of claims 3 to 5, **characterised in that**
- a handle plate (18, 19) is provided on the opposite outer sides of the parts (10', 10") of the receiving casing (10) extending relative to the two supporting sides (1', 1") of the cover (1), the central region of the pivoting part (e) of each handle plate extending through a passage opening (17) in the parts of the receiving casing and being pivoted to a facing region of the receiving part (11),
- at least one slide part (27) projects from the handle plates (18, 19) on the inside opposite the actuating edge thereof and when the handle plates pivot from their inoperative position (c) into the operative position (d) the slide part (27) co-operates with the associated distance pins (7 or 8) of the two slide bolts (5) so that they are moved from the locked position (a) into the unlocked position (b).

7. A cover according to claim 6, **characterised in that** the two handle plates (18, 19) are each held in the inoperative position (c) by a tension spring (24) disposed in the receiving part (11).

8. A cover according to claim 6 or claim 7, **characterised in that** the first and second part (10', 10") of the receiving casing (10) have thin peripheral edges resting on the cover (1), wherein each peripheral edge surrounds the respective passage opening (17) in each casing part, each opening containing the handle plates (18, 19) which when in the inoperative position (c) have their surfaces flush with the peripheral edges of the casing parts, wherein a recessed grip (25) in each inoperative position (c) lies between the actuating edge of the handle plate and the facing peripheral edge (17') of the passage opening (17).

9. A cover according to any of claims 3 to 8, **characterised in that** the first casing part (10'), on opposite side edges, has at least one catch or clip (28) which, when the two casing parts (10', 10") are in the assembled position on the cover (1), engages and locks in associated recesses (29) on the second casing part (10"), the casing parts being in a recess (30) in the cover.

## Revendications

1. Couvercle pour une paroi d'habitacle de véhicule, notamment pour le fond du coffre à bagages d'un véhicule de tourisme, selon lequel
le couvercle peut être prévu au choix sur l'un des côtés d'appui, en regard de la paroi intérieure du véhicule,
le couvercle (1) comporte au moins un élément d'accrochage (5) qui peut être actionné par ses deux côtés d'appui (1', 1"), cet élément d'accrochage (5) s'accrochant de manière amovible à une partie (4) solidaire du châssis du véhicule,
**caractérisé par**
deux verrous coulissants (5), écartés, parallèles, reliés rigidement par deux goujons d'écartement (7, 8), écartés l'un de l'autre,
l'extrémité libre des deux verrous coulissants (5) étant en forme de surface inclinée (5') et les plans des surfaces inclinées sont dirigés dans des directions opposées.

2. Couvercle selon la revendication 1,
**caractérisé en ce que**
l'élément d'accrochage est toujours l'un des deux verrous (5) coulissant longitudinalement, prévu dans la région de bord côté arrière du couvercle (1) qui se trouve dans le fond (2) du coffre à bagages, ce verrou coulissant pénétrant, en position de verrouillage (a), sous l'effet d'un ressort, derrière la partie (4) solidaire du châssis du véhicule.

3. Couvercle selon la revendication 1 ou 2,
**caractérisé par**
un boîtier (10) divisé longitudinalement, recevant de manière solidaire en coulissement une pièce de réception 11 en forme de plaque dans sa seconde partie de boîtier (10"), cette pièce ayant une cavité (14) en forme de U, ouverte vers le segment d'extrémité du verrou coulissant (5).

4. Couvercle selon la revendication 3,
**caractérisé en ce que**
les verrous coulissants (5) reliés rigidement l'un à l'autre coopèrent par des guides longitudinaux latéraux (9) avec les bords latéraux opposés (14') de la cavité (14) en forme de U de la pièce de réception (11), par coulissement longitudinal.

5. Couvercle selon l'une des revendications 3 ou 4,
**caractérisé en ce qu'**
un élément de ressort (15) s'appuie contre la pièce de réception (11) et coopère avec précontrainte contre les deux verrous coulissants (7), pour les tenir en position verrouillée (a).

6. Couvercle selon l'une des revendications 3 à 5,
**caractérisé en ce qu'**
- une plaque de préhension (18, 19) respective est prévue sur les côtés extérieurs des parties de boîtier (10, 10', 10") du boîtier de réception (10), côtés opposés par rapport aux deux côtés d'appui (1', 1") du couvercle (1), ces plaques de préhension étant articulées respectivement dans la région médiane de leur segment de pivotement (e) en traversant un orifice de passage (17) des parties de boîtier du boîtier de réception, chaque fois dans la zone en regard de la pièce de réception (11),
- chaque fois au moins une pièce de poussée (27) est en saillie des plaques de préhension (18, 19), du côté intérieur, en regard du bord d'actionnement, cette pièce de poussée coopérant lors du pivotement des plaques de préhension entre leur position de repos (c) dans la position active (d) avec le goujon d'écartement (7 ou 8) associé aux deux verrous coulissants (5) de façon que ceux-ci soient déplacés de la position de verrouillage (a) dans la position de déverrouillage (b).

7. Couvercle selon la revendication 6,
**caractérisé en ce que**
les deux plaques de préhension (18, 19) sont tenues en position de repos (c) respectivement par un ressort de traction (24) appliqué de son côté contre la pièce de réception (11).

8. Couvercle selon la revendication 6 ou 7,
**caractérisé en ce que**
la première et la seconde partie (10', 10") du boîtier de réception (10) ont des bords périphériques s'appuyant sur le couvercle (1) d'une épaisseur de paroi faible,
les bords périphériques entourent respectivement l'orifice de passage (17) prévu dans les deux parties de boîtier, dans lequel se trouvent les plaques de préhension (18, 19) en position de repos (c), au niveau de la surface supérieure des bords périphériques des parties de boîtier,
et dans leur position de repos (c), il ya une goulotte de préhension (25) respective, située entre le bord d'actionnement de la plaque de préhension et l'arête périphérique (17') en regard de l'orifice de passage (17).

9. Couvercle selon l'une des revendications 3 à 8,
**caractérisé en ce que**
la première partie de boîtier (10') présente chaque fois au moins un clip d'arrêt (28) sur les bords latéraux opposés, ces clips venant s'accrocher en position de montage des deux parties de boîtier (10', 10") contre le couvercle (1) dans des cavités (29) associées prévues dans la seconde partie de boîtier (10") et ainsi les parties de boîtier se trouvent dans une cavité (30) du couvercle.
